(19) Europäisches Patentamt / European Patent Office / Office européen des brevets

(11) EP 1 903 074 B1

(12) **EUROPEAN PATENT SPECIFICATION**

(45) Date of publication and mention of the grant of the patent:
**14.10.2009 Bulletin 2009/42**

(21) Application number: **06780726.3**

(22) Date of filing: **03.07.2006**

(51) Int Cl.:
***C08L 45/00*** *(2006.01)* ***C08K 5/3435*** *(2006.01)*
***C08L 25/04*** *(2006.01)* ***C08L 65/00*** *(2006.01)*

(86) International application number:
**PCT/JP2006/313222**

(87) International publication number:
**WO 2007/004605 (11.01.2007 Gazette 2007/02)**

(54) **RESIN COMPOSITION**

HARZZUSAMMENSETZUNG

COMPOSITION DE RÉSINE

(84) Designated Contracting States:
**DE FR GB**

(30) Priority: **01.07.2005 JP 2005193310**

(43) Date of publication of application:
**26.03.2008 Bulletin 2008/13**

(73) Proprietor: **Zeon Corporation**
**Tokyo 100-8246 (JP)**

(72) Inventor: **SAWAGUCHI, Taichi,**
**ZEON CORPORATION**
**Chiyoda-ku, Tokyo 1008246 (JP)**

(74) Representative: **Vossius & Partner**
**Siebertstrasse 4**
**81675 München (DE)**

(56) References cited:
**EP-A- 1 291 386**
**WO-A1-01/92412**
**WO-A1-20/04085538**
**DE-A1- 10 016 379**
**JP-A- 01 160 959**
**JP-A- 07 216 152**
**JP-A- 09 268 250**
**JP-A- 2002 071 964**
**JP-A- 2003 276 047**
**JP-A- 2003 529 588**
**US-A- 4 725 634**
**US-A1- 2003 207 983**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 903 074 B1

## Description

The present invention relates to a resin composition having superior transparency and tolerability for blue rays.

Transparent resins known to be employed for optical uses include polycarbonate resin, polymethyl methacrylate resin, alicyclic structure-containing polymer, cellulose triacetate, polyester resin, polypropylene resin and polyarylate resin.

The alicyclic structure-containing polymers known include norbornene polymer obtained by polymerization of monomer having norbornene structure and other monomer if needed, polymer obtained by hydrogenation of aromatic ring in random copolymer of styrene and isoprene, additional polymer with tetracyclododecene and ethylene, polymer obtained by hydrogenation of ring-opening polymer with tetracyclododecene and cyclopentadiene, as a result of their superior transparency, they are supplied for the production of molded products such as containers and optical components such as light recording mediums, lenses, prisms, light guide plates and others.

In addition, compound of hindered amine compounds and these resins is examined to improve characteristics of the molded products.

For example, in Patent Document 1, it is described that as a hindered amine compound to be compounded with an alicyclic structure-containing polymer, when hindered amine compounds where a piperidine structure is connected to N atom in amino groups such as poly[{6-(1,1,3,3-tetramethylbutyl) amino-1,3,5- triazine-2,4-diyl} {(2,2,6,6-tetramethyl-4-piperidyl)imino} hexamethylene {(2,2,6,6-tetra-methyl-4-piperidyl)imino}] are used, it is possible to get transparent molded products such as disk substrates which maintain preferable transparency for the blue laser light. Patent Document 2, for the purpose of getting molded products such as light guide plates without color changes even under ultraviolet irradiation, proposes to compound polymeric hindered amine compounds where piperidine is bonded via amine and triazine, such as polycondensation of dibutylamine, 1,3,5-triazine-N,N'-bis(2,2,6,6-tetramethyl-4-piperidyl-1,6-hexamethylene diamine and N- (2,2,6,6-tetramethyl- 4-piperidyl) butylamine.

In Patent Document 3, in order to obtain a container with excellent light resistance and ultraviolet ray barrier property, it is suggested to compound with an alicyclic structure-containing polymer, piperidine ester of dicarboxylic acid such as bis(2,2',6,6'-tetramethyl-4-piperidine)sebacate as a hindered amine compound. Patent Document 4 discloses a composition mixed an alicyclic structure-containing polymer with hindered amine compound such as a polymer of dimethyl succinate and 4-hydroxy-2,2,6,6- tetramethyl- 1-piperidine ethanol, or bis[1,2,2,6,6-pentamethyl-4-piperidyl] [{3,5-bis(1,1-dimethylethyl)- 4-hydroxyphenyl} methyl] butyl malonate as a kind of piperidine ester of the dicarboxylic acid, which gives molded products such as backlights having excellent transparency and light stability. Patent Document 5 discloses that it is possible to obtain transparent molded products without becoming clouded even under a high temperature environment by compounding [1-{2-(3-[3,5-di-t-butyl-4-hydroxyphenyl] propyoniloxy) ethyl}-4-{3-3,5-di-t-butyl-4-hydroxyphenyl} propyoniloxy]-2,2,6,6- tetramethyl piperidine which is a compound where a piperidine structure is connected to a carbon atom, as a hindered amine compound, with thermoplastic norbornene resin.

Incidentally, in Patent Document 6, piperidine derivatives such as N,N'- (2,2,6,6- tetramethyl- 4-piperidyl)- N, N'-diformylhexamethylenediamine are disclosed as a new hindered amine compound where a piperidine structure is connected to an N atom in the amide bond. Herein, it is described that the piperidine derivatives do not have a peculiar color, but have a preferable compatibility with an organic polymer and a low vapor pressure, and it is stable against thermolysis. In Patent Document 7, it is described that it is possible to obtain molded products which are not yellowed easily under heating conditions, by compounding such a hindered amine compound with synthetic resins such as polyethylene, polycarbonate resin, or poly metacrylate resin.

[Patent Document 1] WO 04/085538
[Patent Document 2] Japanese Patent Laid-Open 2003-276047
[Patent Document 3] Japanese Patent Laid-Open H07-216152
[Patent Document 4] WO 01/92412
[Patent Document 5] Japanese Patent Laid-Open H09-268250
[Patent Document 6] Japanese Patent Laid-Open H01-160959
[Patent Document 7] Japanese Patent Application National Publication 2003-529588

The present inventors have examined the conventional transparent resin compositions mentioned above in various ways, but when blue rays such as blue laser light have been irradiated on molded products from the conventional transparent resin compositions for a long time, the light transmittance of the molded products declines, or they absorb moisture under a high humidity condition, which results in not being enough as materials for an optical component to use optical instruments using a blue laser including light record devices such as DVD.

The object of the present invention is to provide a resin composition which is hard to absorb water, and is superior in transparency, and has a superior tolerability against blue rays.

Therefore, the present inventors have experimented in various ways, and as a result, have found that it is possible to obtain transparent molded products having excellent resistance against blue rays and transparency, and further other preferable characteristics, by compounding to alicyclic structure-containing polymers such as cycloolefin resin, piperidine derivatives having a specific structure such as N,N'- bis(2,2,6,6-tetramethyl- 4-piperidyl)- N,N'-diformyl-hexamethylenediamine as chemical compounds where a piperidine structure is connected with an N atom in the amide bond, in comparative with the composition of alicyclic structure-containing polymers and the conventional hindered amine compounds. The present inventors have come to complete the present invention.

Thus, the present invention provides a resin composition comprising an alicyclic structure-containing polymer and at least one of piperidine derivatives represented in Formula (1).

[CHEMICAL FORMULA 1]

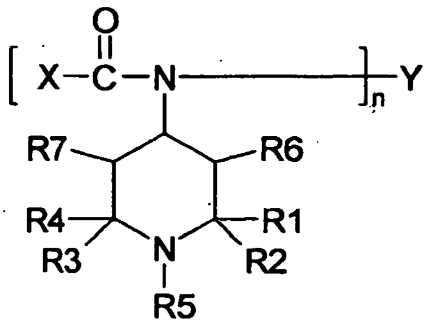

... Formula(1)

In the formula (1),
n is an integer of 1 or 2,

R1, R2, R3 and R4 independently represent
an alkyl group having 1 to 4 of carbon atoms, or
R1 and R2, or R3 and R4 conjoinedly represent tetramethylene group or pentamethylene group,

R6 and R7 independently represent
hydrogen atom; or
an alkyl group having 1 to 4 of carbon atoms;

R5 represents
hydrogen atom;
an alkyl group having 1 to 22 of carbon atoms;
an alkenyl group having 3 to 22 of carbon atoms;
a phenylalkyl group having 7 to 12 of carbon atoms which may be substituted by an alkyl group having 1 to 4 of carbon atoms, fluorine atom, chlorine atom, an alkoxyl group having 1 to 4 of carbon atoms, methylenedioxy group and / or a di-alkyl amino group in which the alkyl has 1 to 4 of carbon atoms ;
an alkanoyl group having 1 to 22 of carbon atoms ;
a cyano alkyl group having 2 to 3 of carbon atoms ;
a hydroxy alkyl group having 1 to 22 of carbon atoms ; or
an amino alkyl group having 2 to 22 of carbon atoms,

X represents
hydrogen atom ;
an alkyl group having 1 to 22 of carbon atoms ;
a cycloalkyl group having 3 ot 12 of carbon atoms ;
a bicycloalkyl group having 6 to 12 of carbon atoms, in which the alkyl group having 1 to 22 of carbon atoms, the cycloalkyl group having 3 to 12 of carbon atoms, and the bicycloalkyl group having 6 to 12 of carbon atoms may be substituted by cyano group, hydroxyl group or an alkoxycarbonyl group having 1 to 4 of carbon atoms, and, in addition, those whose number of carbon is 2 to 22 among the alkyl group having 1 to 22 of carbon atoms may have ether structure which has oxygen atom or sulfur atom in the alkyl chain thereof;
a phenyl alkyl group or a diphenyl alkyl group having 7 to 22 of carbon atoms which may be substituted by an alkyl group having 1 to 4 of carbon atoms, fluorine atom, chlorine atom, an alkoxyl group having 1 to 4 of carbon atoms, methylene dioxy group, ethylene dioxy group or a di-alkyl amino group in which the alkyl has 1 to 4 of carbon atoms;
a phenyl group which may be substituted by an alkyl group having 1 to 4 of carbon atoms or an alkoxycarbonyl group having 1 to 4 of carbon atoms ;
a group represented by the following formula(2) in which the symbols have the same meanings as the above); or

an alkyl group having 1 to 22 of carbon atoms substituted by a heterocycle group ;

[CHEMICAL FORMULA 2]

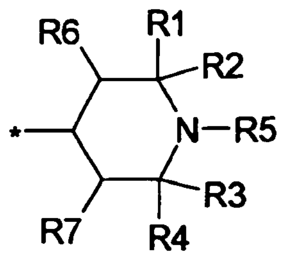

... Formula (2)

Y, when n is 1, represents,
hydrogen atom ;
an alkyl group having 1 to 22 of carbon atoms ;
a cycloalkyl group having 3 to 12 of carbon atoms ;
a bicycloalkyl group having 6 to 12 of carbon atoms,
in which, the alkyl group having 1 to 22 of carbon atoms, the cycloalkyl group having 3 to 12 of carbon atoms, and the bicycloalkyl group having 6 to 12 of carbon atoms may be substituted by cyano group, hydroxyl group or an alkoxycarbonyl group having 1 to 4 of carbon atoms, and, in addition, those whose number of carbon is 2 to 22 among the alkyl group having 1 to 22 of carbon atoms may have ether structure having oxygen atom or sulfur atom in the alkyl chain thereof;
a phenyl alkyl group or a diphenyl alkyl group having 7 to 22 of carbon atoms which may be substituted by an alkyl group having 1 to 4 of carbon atoms, fluorine atom, chlorine atom, an alkoxyl group having 1 to 4 carbon atoms, methylenedioxy group, ethylenedioxy group or a di-alkyl amino group in which the alkyl has 1 to 4 of carbon atoms;
a phenyl group which may be substituted by an alkyl group having 1 to 4 of carbon atoms or an alkoxycarbonyl group having 1 to 4 of carbon atoms;
a group represented by the following formula (3) in which the symbols have the same meanings as the above; or
an alkyl group having 1 to 22 of carbon atoms substituted by a heterocycle group ;

[CHEMICAL FORMULA 3]

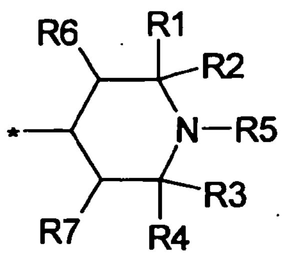

... Formula(3)

Y, when n is 2, represents
an alkylene group having 2 to 22 of carbon atoms ;
a cycloalkylene group having 5 to 22 of carbon atoms ;
a phenylalkylene group having 8 to 14 of carbon atoms ;
a phenylene group ; or
an alkylene group having 2 to 30 of carbon atoms in which oxygen atom, sulfur atom or five to six membered heterocycle group is inserted into the alkylene chain thereof.

In addition, as a preferable embodiment of the present invention, (2) the above resin composition wherein each of R1, R2, R3 and R4 in the formula (1) is methyl group, R5 is hydrogen atom or methyl group, and R6 and R7 are hydrogen atom,

(3) the above resin composition wherein X in the formula (1) is hydrogen atom,

(4) the above resin composition wherein n is 2, X is hydrogen atom, and Y is hexamethylene group in the Formula (1), and / or

(5) the above resin composition wherein the piperidine derivatives represented in the formula (1) is N,N'-bis(2,2,6,6-

tetramethyl- 4-piperidyl)- N,N'-diformyl- alkylene diamine, or N,N'- bis(2,2,6,6-tetramethyl- 4-piperidyl)- N,N'-bisalkylene fatty acid amide,

(6) the above resin composition wherein the piperidine derivatives represented in the formula (1) is N,N'-bis(2,2,6,6-tetramethyl- 4-piperidyl)- N,N'-diformyl- hexamethylenediamine, N,N'- bis(2,2,6,6-tetramethyl- 4-N-methylpiperidyl)-N,N'-diformyl-hexamethylenediamine or N,N'- bis(2,2,6,6-tetramethyl- 4-piperidyl)- N,N'-bishexamethylene stearic acid amide,

(7) The above resin composition wherein the alicyclic structure-containing polymer is norbornene polymer, monocyclic olefin polymer, cyclic conjugated diene polymer, vinyl alicyclic hydrocarbon polymer or hydrogenated products of these,

(8) The above resin composition wherein the alicyclic structure-containing polymer is norbornene polymer, or vinyl alicyclic hydrocarbon polymer or hydrogenated product thereof,

(9) The above resin composition wherein the alicyclic structure-containing polymer is ring-opening polymer with norbornene monomer and hydrogenated product thereof; additional polymer with norbornene monomer and hydrogenated product thereof; additional copolymer with norbornene monomer and vinyl compound, and hydrogenated product thereof; or aromatic ring-hydrogenated product of polymer with vinyl aromatic monomer,

(10) The above resin composition wherein the piperidine derivatives represented in the formula (1) is 0.001 to 5 parts by weight to 100 parts by weight of the alicyclic structure-containing polymer, and

(11) The above resin composition which is for optics, are provided.

A molded product using a resin composition of the present invention barely absorbs water, and is excellent in transparency, and its light transmittance scarcely falls even when the blue rays with the short wavelengths such as blue lasers light are radiated onto it for a long time. Therefore, the resin composition of the present invention is preferable as the optical material for a lens, a diffraction grating, a prism and the like, and in particular preferable as the optical material using a blue laser light.

The resin composition of the present invention comprises an alicyclic structure-containing polymer and a piperidine derivative.

The piperidine derivative comprised in the resin composition of the present invention is expressed by the formula (1).

[CHEMICAL FORMULA 4]

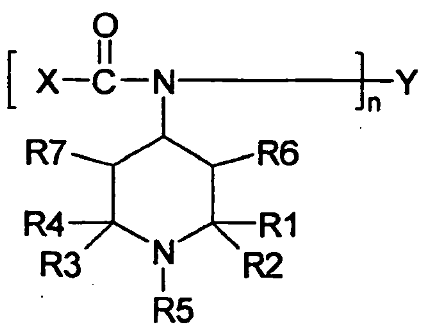

... Formula(1)

In the formula (1), n is an integer of 1 or 2.

In other words, there are one or two of the structure in the brackets of the formula (1).

In the formula (1), R1, R2, R3 and R4 independently represent an alkyl group having 1 to 4 of carbon atoms; or R1 and R2, or R3 and R4 conjoinedly represent tetramethylene group or a pentamethylene group.

R1, R2, R3 and R4 are preferably an alkyl group having 1 to 4 of carbon atoms, and in particular preferably methyl group.

In the formula (1), R6 and R7 independently represent hydrogen atom; or

an alkyl group having 1 to 4 of carbon atoms.

As for R6 and R7, hydrogen atom or methyl group is preferable, and hydrogen atom is particularly preferable.

In the formula (1), R5 represents hydrogen atom ;

an alkyl group having 1 to 22 of carbon atoms;

an alkenyl group having 3 to 22 of carbon atoms;

a phenylalkyl group having 7 to 12 of carbon atoms which may be substituted by an alkyl group having 1 to 4 of carbon atoms, fluorine atom, chlorine atom, an alkoxyl group having 1 to 4 of carbon atoms, methylenedioxy group and / or a

di-alkyl amino group in which the alkyl has 1 to 4 of carbon atoms ;
an alkanoyl group having 1 to 22 of carbon atoms ;
a cyano alkyl group having 2 to 3 of carbon atoms ;
a hydroxy alkyl group having 1 to 22 of carbon atoms ; or
an amino alkyl group having 2 to 22 of carbon atoms.
R5 is preferably hydrogen atom or an alkyl group having 1 to 4 of carbon atoms, and in particular preferably hydrogen atom or methyl group.

X in the formula (1) represents hydrogen atom ;
an alkyl group having 1 to 22 of carbon atoms ;
a cycloalkyl group having 3 to 12 of carbon atoms ;
a bicycloalkyl group having 6 to 12 of carbon atoms, in which the alkyl group having 1 to 22 of carbon atoms, the cycloalkyl group having 3 to 12 of carbon atoms, and the bicycloalkyl group having 6 to 12 of carbon atoms may be substituted by cyano group, hydroxyl group or an alkoxycarbonyl group having 1 to 4 of carbon atoms, and, in addition, those whose number of carbon is 2 to 22 among the alkyl group having 1 to 22 of carbon atoms may have ether structure which has oxygen atom or sulfur atom in the alkyl chain thereof;
a phenyl alkyl group or a diphenyl alkyl group having 7 to 22 of carbon atoms which may be substituted by an alkyl group having 1 to 4 of carbon atoms, fluorine atom, chlorine atom, an alkoxyl group having 1 to 4 of carbon atoms, methylenedioxy group, ethylenedioxy group or a di-alkyl amino group in which the alkyl has 1 to 4 of carbon atoms;
a phenyl group which may be substituted by an alkyl group having 1 to 4 of carbon atoms or an alkoxycarbonyl group having 1 to 4 of carbon atoms ;
a group represented by the following formula(2) in which the symbols have the same meanings as the above); or
an alkyl group having 1 to 22 of carbon atoms substituted by a heterocycle group ;

[CHEMICAL FORMULA 5]

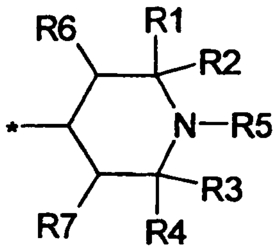

... Formula (2)

As for X, among these, hydrogen atom, an alkyl group having 1 to 22 of carbon atoms, and a cycloalkyl group having 3 to 12 of carbon atoms are preferable, hydrogen atom or an alkyl group having 1 to 22 of carbon atoms is further preferable, and hydrogen atom is particularly preferable.

Y in the formula (1), when n is 1, represents hydrogen atom ;
an alkyl group having 1 to 22 of carbon atoms ;
a cycloalkyl group having 3 to 12 of carbon atoms ;
a bicycloalkyl group having 6 to 12 of carbon atoms, in which, the alkyl group having 1 to 22 of carbon atoms, the cycloalkyl group having 3 to 12 of carbon atoms, and the bicycloalkyl group having 6' to 12 of carbon atoms may be substituted by cyano group, hydroxyl group or an alkoxycarbonyl group having 1 to 4 of carbon atoms, and, in addition, those whose number of carbon is 2 to 22 among the alkyl group having 1 to 22 of carbon atoms may have ether structure having oxygen atom or sulfur atom in the alkyl chain thereof;
a phenyl alkyl group or a diphenyl alkyl group having 7 to 22 of carbon atoms which may be substituted by an alkyl group having 1 to 4 of carbon atoms, fluorine atom, chlorine atom, an alkoxyl group having 1 to 4 carbon atoms, methylenedioxy group, ethylenedioxy group or a di-alkyl amino group in which the alkyl has 1 to 4 of carbon atoms;
a phenyl group which may be substituted by an alkyl group having 1 to 4 of carbon atoms or an alkoxycarbonyl group having 1 to 4 of carbon atoms;
a group represented by the following formula (3) in which the symbols have the same meanings as the above; or
an alkyl group having 1 to 22 of carbon atoms substituted by a heterocycle group ;

[CHEMICAL FORMULA 6]

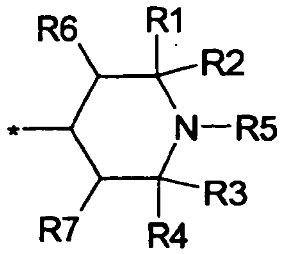

... Formula(3)

As for Y, when n is 1, hydrogen atom, an alkyl group having 1 to 22 of carbon atoms, a cycloalkyl group having 3 to 12 of carbon atoms are preferable, an alkylene group having 2 or 6 of carbon atoms is particularly preferable, an alkylene group having 6 carbon atoms, that is hexamethylene group, is especially preferable.

Y in the formula (1), when n is 2, represents
an alkylene group having 2 to 22 of carbon atoms ;
a cycloalkylene group having 5 to 22 of carbon atoms ;
a phenylalkylene group having 8 to 14 of carbon atoms ;
a phenylene group ; or
an alkylene group having 2 to 30 of carbon atoms in which oxygen atom, sulfur atom or five to six membered heterocycle group is inserted into the alkylene chain thereof.

As for Y at the time when n is 2, an alkylene group having 2 to 22 of carbon atoms; a cycloalkylene group having 5 to 22 of carbon atoms, a phenyl alkylene group having 8 to 14 of carbon atoms is preferable, and an alkylene group having 2 to 22 of carbon atoms is particularly preferable.

As the piperidine derivative expressed by the formula (1), compounds wherein X is hydrogen atom, disclosed in Japanese Unexamined Patent Application Publication H01-160959 are mentioned. In more specific, there are 4-(formylamino)- 2,2,6,6-tetramethyl piperidine, 4- (N-butyl- N-formylamino)-2,2,6,6-tetramethyl piperidine, 4- (N-octyl- N-formylamino)-2,2,6,6- tetramethyl piperidine, 4-(N-cyclopentyl- N-formylamino)- 2,2,6,6-tetramethyl piperidine, 4- (N-cyclohexyl- N-formylamino)-2,2,6,6- tetramethyl pyridine, 4-(N-phenylethyl- N-formylamino)- 2,2,6,6- tetramethyl pyridine, 4- [N-(2,2,6,6-tetramethyl- 4-piperidyl)- N-formylamino]-2,2,6,6- tetramethyl pyridine, N,N'- bis(2,2,6,6-tetramethyl-4-piperidyl)-N,N'- diformylethylenediamine, N,N'- bis(2,2,6,6-tetramethyl-4-piperidyl)-N,N'-diformyl- hexamethylenediamine, N,N'-bis (2,2,6,6-tetramethyl- 4-piperidyl)- N,N'-diformyltrimethylenediamine, N,N'-bis(2,2,6,6-tetramethyl- 4-piperidyl)- N,N'-diformyl- 1,4-xylylenediamine, 4-(N-pentyl- N-formylamino)- 2,2,6,6-tetramethyl piperidine, 4-(N-hexyl- N-formylamino)- 2,2,6,6-tetramethyl piperidine, 4-(N-decyl- N-formylamino)-2,2,6,6-tetramethyl piperidine,

4-(N-dodecyl-N-formylamino)-2,2,6,6-tetramethyl piperidine, 4- (N-octadecyl- N-formylamino)- 2,2,6,6-tetramethyl piperidine, 4- (N-t-butyl- N-formyl amino)- 2,2,6,6- tetramethyl piperidine, 4- (N-i-propyl- N-formyl amino)- 2,2,6,6-tetramethyl piperidine, 4- (N-3-methylbutyl- N-formyl amino)-2,2,6,6- tetramethyl piperidine, 4- (N-methylcyclohexyl- N-formyl amino)- 2,2,6,6-tetramethyl pyridine, 4- (N-1,2,2-trimethylpropyl-N-formyl amino)- 2,2,6,6- tetramethyl piperidine, 4-(N-1,3-dimethylbutyl- N-formyl amino)- 2,2,6,6-tetramethyl piperidine, 4- (N-2-ethylhexyl- N-formyl amino)- 2,2,6,6-tetramethyl piperidine, 4- (N-(1-benzyl- 2-phenylethyl)- N-formyl amino)- 2,2,6,6-tetramethyl piperidine, 4-(N-1-benzylethyl- N-formyl amino)- 2,2,6,6-tetramethyl piperidine, 4-(N-benzyl-N-formyl amino)-2,2,6,6-tetramethyl piperidine, 4-(N-methylbenzyl- N-formyl amino)- 2,2,6,6-tetramethyl piperidine, 4- (N-methoxybenzyl- N-formyl amino)-2,2,6,6-tetramethyl piperidine, 4-(N-dimethylamino benzyl-N-formyl amino)-2,2,6,6-tetramethyl piperidine, 4-(N-fluorobenzyl-N-formyl amino)-2,2,6,6-tetramethyl piperidine, 4-(N-chlorobenzyl- N-formyl amino)-2,2,6,6-tetramethyl piperidine, 4-(N-pyridinylmethyl-N-formyl amino)-2,2,6,6-tetramethyl piperidine, 4-(N-ethoxyethyl- N-formyl amino)- 2,2,6,6- tetramethyl piperidine,

4- (N-ethoxypropyl- N-formyl amino)- 2,2,6,6-tetramethyl piperidine, 4- (N- (3- (2-ethyl-hexoxy)propyl)- N-formyl amino)- 2,2,6,6-tetramethyl piperidine, 4-(N-dimethylaminopropyl- N-formyl amino)- 2,2,6,6-tetramethyl piperidine, 4-(N-diethylaminoethyl- N-formyl amino)- 2,2,6,6-tetramethyl piperidine, 4-(N-(2-(diisopropyl amino) ethyl)-N-formyl amino)-2,2,6,6-tetramethyl piperidine, 4-(N-(2-(1-pyrrolidyl) ethyl)-N-formyl amino)-2,2,6,6-tetramethyl piperidine, 4-(N-(bicyclo [2.2.1]heptyl)- N-formyl amino)- 2,2,6,6-tetramethyl piperidine, 4-(N-isopropylbenzyl- N-formyl amino)- 2,2,6,6-tetramethyl piperidine, 4-(N-(3,4-(methylenedioxy) benzyl)- N-formyl amino)-2,2,6,6- tetramethyl piperidine, 4-(N-(2,4,6-(trimethylbenzyl)- N-formyl amino)- 2,2,6,6-tetramethyl piperidine, 4-(N-2,2-dimethylpropyl- N-formyl amino)- 2,2,6,6-tetramethyl piperidine, 4-(N-cyclododecyl- N-formyl amino)- 2,2,6,6-tetramethyl piperidine, 4-(N-4-hydroxybutyl- N-formyl amino)-2,2,6,6-tetramethyl piperidine, 4-(N-(2-(4-morpholinyl) ethyl)- N-formyl amino)- 2,2,6,6-tetramethyl piperidine, reactant with 4-(N-cyclohexyl- N-formyl amino)- 2,2,6,6-tetramethyl piperidine and acetic anhydride (that is, 4-(N-cyclohexyl- N-formyl amino)- 2,2,6,6-tetramethyl- N-methylcarbonyl piperidine).

In addition, as compounds where X is hydrogen atom, as disclosed in Japanese Unexamined Patent Application National Publication 2003-529588, mentioned are 4-(formyl amino)- 2,2,6,6-tetramethyl-N-methyl piperidine, 4-(N-butyl-N-formyl amino)-2,2,6,6-tetramethyl N-methyl piperidine, 4-(N-octyl-N-formyl amino)- 2,2,6,6-tetramethyl N-methyl piperidine, 4-(N-cyclopentyl- N-formyl amino)-2,2,6,6-tetramethyl N-methyl piperidine, 4-(N-cyclohexyl- N-formyl amino)-2,2,6,6-tetramethyl N-methyl pyridine, 4-(N-phenylethyl- N-formyl amino)-2,2,6,6-tetramethyl N-methyl pyridine, 4-[N-(2,2,6,6-tetramethyl- 4-piperidyl)-N-formyl amino]- 2,2,6,6-tetramethyl- N-methyl pyridine, N,N'- bis(2,2,6,6-tetramethyl- 4-N-methyl piperidyl)- N,N'-diformylethylenediamine, N,N'- bis(2,2,6,6-tetramethyl- 4-N-methyl piperidyl)- N,N'-diformyl-hexamethylenediamine, N,N'- bis(2,2,6,6-tetramethyl- 4-N-methylpiperidyl)-N,N'-diformyl-trimethylenediamine, N,N'- bis (2,2,6,6- tetramethyl- 4-N-methyl piperidyl)- N,N'-diformyl- 1,4-xylylenediamine, 4-(N-pentyl- N-formyl amino)-2,2,6,6- tetramethyl- N-methyl piperidine, 4- (N-hexyl- N-formyl amino)- 2,2,6,6- tetramethyl-N-methyl piperidine, 4-(N-decyl- N-formyl amino)-2,2,6,6-tetramethyl- N-methyl piperidine, 4-(N-2-(4-morpholinyl) ethyl)- N-formyl amino)- 2,2,6,6-tetramethyl- N-methyl piperidine. These may be used alone or in combination of two or more.

In addition, as the compounds where X in the above formula (1) is a group derived from fatty acid, mentioned are N,N'- bis (2,2,6,6-tetramethyl- 4-piperidyl)- N,N'-bishexamethylene acetic acid amide, N,N'-bis(2,2,6,6-tetramethyl-4-piperidyl)- N,N'-bishexamethylene propionic acid amide, N,N'-bis (2,2,6,6- tetramethyl- 4-piperidyl)- N,N'-bis hexamethylene butyric acid amide, N,N'-bis(2,2,6,6-tetramethyl- 4-piperidyl)- N,N'- bishexamethylene valeric acid amide, N, N'-bis(2,2,6,6-tetramethyl-4-piperidyl)-N,N'-bishexamethylene caproic acid amide, N,N'- bis (2,2,6,6- tetramethyl- 4-piperidyl)- N,N'-bishexamethylene heptanoic acid amide, N,N'-bis (2,2,6,6- tetramethyl- 4-piperidyl)- N,N'-bis hexamethylene caprylic acid amide, N,N'-bis (2,2,6,6-tetramethyl- 4-piperidyl)- N,N'-bis hexamethylene pelargonic acid amide, N,N'-bis(2,2,6,6-tetramethyl- 4-piperidyl)- N,N'-bis hexamethylene capric acid amide, N,N'-bis(2,2,6,6-tetramethyl- 4-piperidyl)- N,N'-bishexamethylene undecylic acid amide, N,N'- bis (2,2,6,6-tetramethyl- 4-piperidyl)- N,N'-bishexamethylene lauric acid amide, N,N'-bis(2,2,6,6-tetramethyl- 4-piperidyl)- N,N'-bishexamethylene tridecylic acid amide, N,N'-bis(2,2,6,6-tetramethyl- 4-piperidyl)-N,N'-bishexamethylene myristic acid amide, N,N'-bis (2,2,6,6-tetramethyl- 4-piperidyl)- N,N'-bishexamethylene pentadecyl acid amide, N,N'- bis(2,2,6,6-tetramethyl- 4-piperidyl)- N,N'-bishexamethylene palmitic acid amide, N,N'-bis(2,2,6,6-tetramethyl- 4-piperidyl)- N,N'-bishexamethylene margaric acid amide,

N,N'-bis(2,2,6,6-tetramethyl-4-piperidyl)-N,N'-bishexamethylene stearic acid amide, N,N'-bis (2,2,6,6-tetramethyl- 4-piperidyl)- N,N'-bishexamethylene nonadecylic acid amide, N,N'-bis(2,2,6,6-tetramethyl- 4-piperidyl)- N,N'-bishexamethylene arachidic acid amide, N,N'-bis(2,2,6,6-tetramethyl-4-piperidyl)-N,N'-bishexamethylene behenic acid amide, N,N'-bis (2,2,6,6-tetramethyl- 4-piperidyl)- N,N'-bishexa-methylene acrylic acid amide, N,N'-bis(2,2, 6,6-tetramethyl- 4-piperidyl)- N,N'-bishexamethylene crotonic acid amide, N,N'-bis(2,2,6,6-tetramethyl-4-piperidyl)-N,N'-bishexamethylene angelic acid amide, N,N'- bis(2,2,6,6-tetramethyl- 4-piperidyl)- N,N'-bis hexamethylene brenzterebic acid amide, N,N'-bis(2,2, 6,6-tetramethyl- 4-piperidyl)- N,N'-bis hexamethylene citronellic acid amide, N,N'-bis(2,2,6,6-tetramethyl- 4-piperidyl)- N,N'-bishexamethylene undecylenic acid amide, N,N'-bis(2,2,6,6-tetramethyl-4-piperidyl)- N,N'-bishexamethylene rindelic acid amide, N,N'- bis(2,2,6,6-tetramethyl- 4-piperidyl)-N,N'-bishexamethylene spermic acid amide, N,N'-bis(2, 2,6,6-tetramethyl-4-piperidyl)-N,N'-bishexamethylene zomarinic acid amide, N,N'-bis(2,2,6,6-tetramethyl-4-piperidyl)-N,N'-bishexamethylene oleic acid amide, N,N'-bis(2,2,6,6-tetramethyl- 4-piperidyl)- N,N'- bis hexamethylene gadlanic acid amide and the like.

Among these, N,N'-bis(2,2,6,6-tetramethyl-4-piperidyl)-N,N'-diformyl-alkylenediamine, N,N'-bis(2, 2,6,6-tetramethyl-4-piperidyl)-N,N'-bisalkylene fatty acid amide are preferable, and N,N'-bis(2,2,6,6-tetramethyl-4-piperidyl)-N, N'-diformylhexamethylenediamine is in particular preferable.

The amount of the piperidine derivative represented in the formula (1) is preferably 0.001 to 5 parts by weight, further preferably 0.01 to 1 parts by weight to 100 parts by weight of alicyclic structure-containing polymer to be described later herein.

An alicyclic structure-containing polymer used in the present invention has an alicyclic structure in the main chain and / or the side chain, and from the viewpoint of heat resistance and mechanical strength, one having the alicyclic structure in the main chain is preferable.

As alicyclic structure, mentioned are cycloalkane structure, cycloalkene structure and the like, but from the viewpoint of mechanical strength and heat resistance, cycloalkane structure is preferable. The number of carbon atoms constituting the alicyclic structure is usually 4 to 30, preferably 5 to 20, further preferably 5 to 15 from the viewpoint of mechanical strength, heat resistance, and mold-processing property. The amount of repeat unit having the alicyclic structure is appropriately chosen depending on the purpose of use, but it is usually 50 percents by weight or more, preferably 70 percents by weight or more, and further preferably 90 percents by weight or more. It is preferable that the amount of the repeat unit having the alicyclic structure is in this range, from the viewpoint of mechanical strength and heat resistance.

As specific examples of such an alicyclic structure-containing polymer, mentioned are norbornene polymer, monocyclic olefin polymer, cyclic conjugated diene polymer, vinyl alicyclic hydrocarbon polymer and hydrogenated products of these or the like. Among these, norbornene polymer, vinyl alicyclic hydrocarbon polymer and hydrogenated products thereof are preferable, and norbornene polymer is further preferable from viewpoint of heat resistance and

mechanical strength.

Norbornene polymer is a well-known polymer disclosed in, for example, Japanese Unexamined Patent Application Publication H03-14882 or Japanese Unexamined Patent Application Publication H03-122137. In specific, ring-opening polymer with norbornene monomer and hydrogenated product thereof, additional polymer with norbornene monomer and hydrogenated product thereof, and additional copolymer with norbornene monomer and vinyl compound and hydrogenated product thereof may be mentioned. Among these. hydrogenated product of norbornene polymer is preferable.

As specific examples of norbornene monomer used for polymerization, mentioned are norbornene monomers that do not have norbornane ring such as bicyclo[2.2.1] hepto-2-en (popular name is norbornene), 5-methyl- bicyclo [2.2.1] hepto-2-en, 5,5-dimethyl-bicyclo [2.2.1]hepto-2-en, 5-ethyl-bicyclo [2.2.1] hepto-2-en, 5-butyl- bicyclo [2.2.1]hepto-2-en, 5-hexyl-bicyclo [2.2.1]hepto-2-en, 5-octyl-bicyclo[2.2.1]hepto-2-en, 5-octadecyl-bicyclo [2.2.1]hepto-2-en, 5-ethylidene-bicyclo[2.2.1]hepto-2-en, 5-methylidene-bicyclo [2.2.1]hepto-2-en, 5-vinyl-bicyclo[2.2.1]hepto-2-en, 5-propenyl-bicyclo [2.2.1]hepto-2-en,

5-methoxy-carbonyl-bicyclo[2.2.1]hepto-2-en, 5-cyano-bicyclo[2.2.1]hepto-2-en, 5-methyl-5-methoxycarbonyl-bicyclo [2.2.1] hepto-2-en, 5-methoxycarbonyl-bicyclo[2.2.1]hepto-2-en, 5-ethoxy-carbonyl-bicyclo[2.2.1]hepto-2-en, 5-methyl-5-ethoxycarbonyl-bicyclo[2.2.1]hepto-2-en, bicyclo[2.2.1]hepto-5-enyl-2-methyl propyonate, bicyclo[2.2.1] hepto-5-enyl-2-methyl octhanate, bicyclo [2.2.1]hepto-2-en-5,6-dicarboxylic acid anhydride, 5-hydroxymethyl-bicyclo [2.2.1] hepto-2-en, 5,6-di(hydroxymethyl)-bicyclo [2.2.1] hepto-2-en, 5-hydroxy- i-propyl- bicyclo [2.2.1]hepto-2-en, bicyclo [2.2.1]hepto-2-en, 5,6-dicarboxy-bicyclo [2.2.1] hepto-2-en, bicyclo[2.2.1] hepto-2-en-5,6-dicarboxylic acid imide, 5-cyclo pentyl-bicyclo [2.2.1] hepto-2-en, 5-cyclohexyl-bicyclo [2.2.1]hepto-2-en, 5-cyclohexenyl-bicyclo [2.2.1]hepto-2-en, 5-phenyl-bicyclo[2.2.1]hepto-2-en,

trcyclo[4.3.$1^{2,5}$.$0^{1,6}$]deca-3,7-diene (popular name is cyclopentadiene), tricyclo[4.3.$1^{2,5}$.$0^{1,6}$] deca-3-en, tricyclo [4.4.$1^{2,5}$.$0^{1,6}$]undeca-3,7-diene, tricyclo [4.4.$1^{2,5}$.$0^{1,6}$] undeca-3,8-diene, tricyclo [4.4.$1^{2,5}$.$0^{1,6}$] undeca-3-ene, tetracyclo [7.4.$1^{10,13}$.$0^{1,9}$.$0^{2,7}$] trideca-2, 4, 6, 11-tetraen (also referred to as 1,4-methano- 1,4,4a,9a-tetrahydro fluorene), tetracyclo [8.4.$1^{11,14}$.$0^{1,10}$.$0^{3,8}$] tetradeca-3,5,7,12-tetraen (also referred to as 1,4-methano-1,4,4a,5,10,10a-hexahydroanthracene);

norbornene monomers having norbornane ring such as tetracyclo [4.4.$1^{2,5}$.$1^{7,10}$.0] dodeca-3-en (popular name is tetracyclododecene), 8-methyl-tetracyclo [4.4.$1^{2,5}$.$1^{7,10}$.0] dodeca-3-en, 8-methyl-tetracyclo [4.4.$1^{2,5}$.$1^{7,10}$.0] dodeca-3-en, 8-ethyl-tetracyclo [4.4.$1^{2,5}$.$1^{7,10}$.0] dodeca-3-en, 8-methylidene-tetracyclo[4.4.$1^{2,5}$.$1^{7,10}$.0]dodeca-3-en, 8-ethylidene-tetracyclo[4.4.$1^{2,5}$.$1^{7,10}$.0]dodeca-3-en, 8-vinyl-tetracyclo[4.4.$1^{2,5}$.$1^{7,10}$.0]dodeca-3-en, 8-propenyl-tetracyclo [4.4.$1^{2,5}$.$1^{7,10}$.0]dodeca-3-en, 8-methoxycarbonyl-tetracyclo [4.4.$1^{2,5}$.$1^{7,10}$.0] dodeca-3-en, 8-methyl- 8-methoxycarbonyl- tetracyclo [4.4.$1^{2,5}$.$1^{7,10}$.0] dodeca-3-en, 8-hydroxymethyl-tetracyclo [4.4.$1^{2,5}$.$1^{7,10}$.0]dodeca-3-en, 8-carboxy-tetracyclo [4.4.$1^{2,5}$.$1^{7,10}$.0] dodeca-3-en, 8-cyclopentyl-tetracyclo [4.4.$1^{2,5}$.$1^{7,10}$.0] dodeca-3-en, 8-cyclohexyl-tetracyclo [4.4.$1^{2,5}$.$1^{7,10}$.0] dodeca-3-en, 8-cyclohexenyl-tetracyclo [4.4.$1^{2,5}$.$1^{7,10}$.0]dodeca-3-en, 8-phenyl-tetracyclo [4.4.$1^{2,5}$.$1^{7,10}$.0]dodeca-3-en, pentacyclo [6.5.$1^{1,8}$.$1^{3,6}$.$0^{2,7}$.$0^{9,13}$] pentadeca-3,10-diene, pentacyclo [7.4.$1^{3,6}$.$1^{10,13}$.$0^{1,9}$.$0^{2,7}$] pentadeca-4,11-diene.

In addition, mentioned are norbornene monomers having polar group such as 5-methoxycarbonyl bicyclo [2.2.1] hepto-2-en, 5-methyl-5-methoxycarbobyl bicyclo [2.2.1]hepto-2-en, 5-cyano bicyclo[2.2.1]hepto-2-en, 8-methoxycarbonyl tetracyclo[4.4.0.$1^{2,5}$.$1^{7,10}$]dodeca-3-en, 8-ethoxycarbonyl tetracyclo[4.4.0.$1^{2,5}$.$1^{7,10}$] dodeca-3-en, 8-n-propoxycarbonyl tetracyclo [4.4.0. $1^{2,5}$.$1^{7,10}$] dodeca-3-en, 8-isopropoxycarbonyl tetracyclo[4.4.0.$1^{2,5}$.$1^{7,10}$]dodeca-3-en, 8-n-butoxy carbonyl tetracyclo[4.4.0.$1^{2,5}$.$1^{7,10}$]dodeca-3-en, 8-methyl- 8-methoxycarbonyl tetracyclo [4.4.0.$1^{2,5}$. $1^{7,10}$]dodeca-3-en, 8-methyl- 8-ethoxycarbonyl tetracyclo[4.4.0.$1^{2,5}$.$1^{7,10}$]dodeca-3-en, 8-methyl-8-n -propoxycarbonyl tetracyclo [4.4.0.$1^{2,5}$.$1^{7,10}$]dodeca-3-en, 8-methyl-8-isoproxycarbonyl tetracyclo [4.4.0. $1^{2,5}$.$1^{7,10}$]dodeca-3-en, 8-methyl-8-n-butoxycarbonyl tetracyclo[4.4.0.$1^{2,5}$.$1^{7,10}$]dodeca-3-en. The above norbornene monomers may be used alone or in combination of two or more.

In the present invention, besides the above norbornene monomers, as additional copolymerizable monomers, for example, employed are $\alpha$-olefin having 2 to 20 of carbon atoms such as ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecenen, 1-eicocene; cycloolefin such as cyclobutene, cyclopentene, cyclohexene, 3,4-dimethyl cyclopentene, 3-methyl cyclohexene, 2-(2-methylbutyl)-1-cyclohexene, cyclooctene; nonconjugated diene such as 1,4-hexadiene, 4-methyl-1,4-hexadiene, 5-methyl-1,4-hexadiene, 1,7-octadiene; and the like. These copolymerizable monomers may be used alone or in combination of two or more.

Ring-opening polymer with the above norbornene monomers may be obtained by ring-opening polymerization usually at polymerization temperature of -50 °C to 100 °C and polymerization pressure of 0 to 50 kg/$cm^2$ in solvent or without solvent, by use of catalyst comprising halogenide, nitrate salt or acetylacetone compound with metal such as ruthenium, rhodium, palladium, osmium, iridium or platinum, and a reducing agent, or catalyst comprising halogenide or acetylacetone compound with metal such titanium, vanadium, zirconium, tungsten or molybdenum and an organic

aluminum compound as ring-opening polymerization catalyst.

Additional polymer with the norbornene monomers or additional copolymer with the norbornene monomer and additional copolymerizable monomer may be obtained by, for example, a method of copolymerization usually at polymerization temperature of -50 °C to 100 °C and polymerization pressure of 0 to 50 kg/cm$^2$ with the monomers, in solvent or without solvent, in the presence of catalyst comprising a compound with titanium, zirconium or vanadium and an organic aluminum compound.

Hydrogenated product of norbornene polymer can be obtained, according to a conventional procedure, by a method of hydrogenation comprising step of contacting ring-opening (co)polymer with norbornene monomer, additional polymer with norbornene monomer or additional copolymer with norbornene monomer and additional copolymerizable monomer with hydrogen in the presence of hydrogenation catalyst.

As monocyclic olefin polymer, for example, additional polymers with monocyclic olefin monomers such as cyclohexene, cycloheptene and cyclooctene as disclosed in Japanese Unexamined Patent Application Publication 64-66216 may be employed.

As cyclic conjugated diene polymer, for example, polymers which are obtained by 1,2- or 1,4-additional-polymerization with cyclic conjugated diene monomers such as cyclopentadiene and cyclohexadiene, and hydrogenated products thereof as disclosed in Japanese Unexamined Patent Application Publication H06-136057 or Japanese Unexamined Patent Application H07-258318 may be employed.

As vinyl alicyclic hydrocarbon polymer, for example, used may be polymers with vinyl alicyclic hydrocarbon monomers such as vinyl cyclohexene and vinyl cyclohexane, and hydrogenated products thereof as disclosed in Japanese Unexamined Patent Application Publication 51-59989, and aromatic ring-hydrogenated product of polymer with vinyl aromatic monomers such as styrene and α-methylstyrene as disclosed in Japanese Unexamined Patent Application Publication 63-43910, Japanese Unexamined Patent Application Publication 64-1706 and the like.

The vinyl alicyclic hydrocarbon polymer may be one obtained by copolymerization with conjugated diene monomers such as butadiene and isoprene, chain olefin monomers such as ethylene and propylene, nitrile monomers such as acrylonitrile and methacrylonitrile, acrylic monomers such as (meth)acrylic acid methyl and (meth)acrylic acid ethyl as comonomers. In addition, configuration of the vinyl alicyclic hydrocarbon polymers may be any of atactic, isoatactic and syndiotactic, and for example, every one being 0 to 100 % in syndiotacticity by the diad indication may be employed.

The alicyclic structure-containing polymer to be used for the present invention may have polar group. As the polar group, heteroatom or group having heteroatom may be mentioned, and as the heteroatom may be mentioned oxygen atom, nitrogen atom, silicon atom halogen atom and the like. In these, from the viewpoint of dispersibility and compatibility with inorganic compound, oxygen atom and nitrogen atom are preferable. As specific examples of the polar group may be mentioned carboxyl group, carbonyloxycarbonyl group, epoxy group, hydroxy group, oxy group, ester group, silanol group, cyril group, amino group, nitrile group, sulfone group and the like.

Molecular weight of the alicyclic structure-containing polymer used in the present invention is appropriately chosen depending on the purpose of use, but when it is usually 5,000 to 500,000, preferably 8,000 to 300,000, and further preferably 10,000 to 200,000 in weight average molecular weight of polyisoprene conversion as measured by gel-permeation-chromatograph method with cyclohexane solution or toluene solution when the polymer does not dissolve, mechanical strength and mold-processing property are highly balances, which is preferable. Glass transition temperature (Tg) of the alicyclic structure-containing polymer used in the present invention should be appropriately chosen depending on the purpose of use, but it is usually 50 to 300 °C, preferably 60 to 200 °C, and further preferably 70 to 180 °C.

A resin composition in the present invention, besides the alicyclic structure-containing polymer and the piperidine derivative represented in the formula (1), may contain appropriately coloring agent such as pigment or dye, fluorescence brightener, dispersant, heat stabilizer, light stabilizer, ultraviolet absorber, antistatic agent, antioxidant, lubricant, solvent or the like.

A resin composition of the present invention is not limited in particular by the preparation method thereof. For example, a method to add the above piperidine derivative to alicyclic structure-containing polymer kneaded by a kneading machine such as a roll, a kneader, an extrusion kneader, a bumbury mixer, a feeder ruder; or, a method to dissolve the above piperidine derivative in a solution of alicyclic structure-containing polymer and to remove the solvent from the solution. The temperature of kneading is preferably 200 to 400 °C, and further preferably 240 to 350 °C.

A resin composition of the present invention enables various molded products by a well-known molding method. For example, solution casting method, molten extrusion method, press molding method, inflation molding method, injection molding method, blow molding method, extension molding method and the like may be mentioned as the molding method.. The molded product obtained in these ways is preferably used as the materials for optical components, motor parts, electric / electronic parts, packaging members and the like, and particularly it is specifically preferably used as materials for packaging members and electronic parts such as the fuel tank for a fuel cell and the like. In particular, a resin composition of the present invention has high tolerability against high energy rays such as blue lasers light and the like, and accordingly it is preferable for optical components which use a blue laser light, for example, lenses such

as pickup lens or fθ lens ; optical disks such as video disk, memory disk and so forth.

EXAMPLES

The present invention is explained in more specific with reference to Examples and Comparative examples hereinafter, but the present invention is not limited to only these Examples. In addition, parts and % are of weight standard, and pressure is gauge pressure, unless otherwise specified.

[Production Example 1]

Under nitrogen atmosphere, to 690 parts of dehydrated toluene, 300 parts of 1,4-methano-1,4,4a,9a-tetrahydrofluorene, 1.1 parts of 1-hexene, 11 parts of toluene solution of 0.3 percent by weight of tungsten chloride and 0.6 part of tetrabutyl tin were added, and polymerization was carried out at 60 °C under ordinary pressure for one hour. the obtained polymer had number average molecular weight (Mn) of 17,700, weight average molecular weight (Mw) of 35,400, and molecular weight distribution (Mw/Mn) of 2.0. In addition, Mw and Mn (polystyrene conversion) of polymer were measured by a high speed liquid chromatography using toluene as a solvent.

To 240 parts of the polymerization reaction solution, 6 parts of alumina-supported nickel catalyst including 0.70 part of nickel and 0.2 part of nickel oxide in 1 part of the catalyst and having pore capacity of 0.8 $cm^3/g$ and specific surface area of 300 $cm^2/cm$ and 5 parts of isopropyl alcohol were added, and hydrogenation reaction was carried out at 230 °C, 45 $kgf/cm^2$ for 5 hours in an autoclave. The hydrogenation reaction solution from which the catalyst was removed by filtration was stirred and poured into a mixed solvent with 250 parts of acetone and 250 parts of isopropanol to deposit hydrogenated product, the product was selected by filtration to be collected. The collected hydrogenated product was further washed with 200 parts of acetone and subsequently dried by vacuum drying machine at 100 °C that was decompressed 1 mmHg or less for 24 hours. The yield of the hydrogenated product was 99%. The hydrogenated ratio of the double bond in the polymer main chain was 99.9% or more, and the hydrogenated ratio of the aromatic ring structure was 99.8%. In addition, the hydrogenated ratio was measured by $^1H$-NMR. the hydrogenated product (hereinafter referred to as HROP1) has number average molecular weight (Mn) of 22,600, weight average molecular weight (Mw) of 42,500, molecular weight distribution (Mw/Mn) of 1.88, and glass transition temperature (Tg) of 136 °C. In addition, Mw and Mn (polyisoprene conversion) of the hydrogenated product was measured by a high speed liquid chromatography using cyclohexane as a solvent.

[Production Example 2]

Under nitrogen atmosphere, to 500 parts of dehydrated cyclohexane, 0.82 part of 1-hexene, 0.15 part of dibutyl ether, and 0.30 part of triisobutyl aluminum were mixed into a reactor at room temperature, and the temperature was kept at 45 °C, and subsequently 30 parts of 8-ethyl-tetracyclo [4.4.0.$1^{2,5}$.$1^{7,10}$]dodeca-3-en (hereinafter referred to as ETD), 170 parts of tricyclo [4.3.0.$1^{2,5}$]deca-3,7-diene (hereinafter referred to as DCP) and 40 parts of toluene solution of 0.7% tungsten hexachloride were continuously added for two hours and polymerized. To the polymerization solution, 1.06 parts of butylgrycidyl ether and 0.52 part of isopropyl alcohol were added to inactivate the polymerization catalyst and stop the polymerization reaction. The amount of the unreacted ETD and DCP left in the polymerization solution was determined by the gas chromatography method, and it was found from the measurements that ETD and DCP in the polymer were copolymerized at 15/85 by weight ratios equal to approximately feed composition for copolymerization.

Subsequently, to 100 parts of the polymerization reaction solution, 270 parts of cyclohexane was added, and further 5 parts of nickel-alumina catalyst was added as a hydrogenation catalyst, and warmed to temperature 200 °C while being pressurized to 50 $kg/cm^2$ by hydrogen, and stirred and reacted for four hours to obtain the reaction solution containing hydrogenated product of ETD/DCP ring-opening polymer by 20%. The hydrogenation reaction solution from which the catalyst was removed by filtration was stirred and poured into a mixed solvent of 250 parts of acetone and 250 parts of isopropanol to deposit the hydrogenated product, the product was selected by filtration and collected. The collected hydrogenated product was further washed with 200 parts of acetone and subsequently dried by a vacuum drying machine at 100 °C that was decompressed 1 mmHg or less for 24 hours. The yield of the hydrogenated product was 99%. The hydrogenated product of ring-opening polymer (hereinafter referred to as HROP2) had weight average molecular weight (Mw) of 31,000, hydrogenated ratio of 99.9%, and Tg of 100 °C.

[Production Example 3]

Into a nitrogen substituted stainless steel pressure-resistant container, 76 parts of styrene (St) and 4 parts of isoprene (IP) were encapsulated and stirred to prepare a mixed monomer. Next, into a nitrogen substituted stainless steel autoclave with an electromagnetic stirrer, 320 parts of dehydrated cyclohexane, 4 parts of the mixed monomer

and 0.1 part of dibutyl ether were charged, and while they were being stirred at 50 °C, 0.18 part of hexane solution (concentration 15%) of n-butyl lithium was added and polymerization was initiated. After a lapse of 0.5 hours from the initiation (the polymerization transformation ratio at this point in time was 96%), 76 parts of the mixed monomer was added continually into the polymerization reaction solution for one hour to continue the polymerization reaction. After a lapse of 0.5 hour from the addition completion (the polymerization transformation ratio at this point in time was 95%), 0.1 part of isopropyl alcohol was added to stop the polymerization reaction, which resulted in obtaining a styrene-isoprene copolymer.

Subsequently, to 400 parts of the above polymerization reaction solution, 8 parts of stabilized nickel hydrogenation catalyst that is 60% nickel supported on silica-alumina carrier) was added, and it was charged into a stainless steel autoclave. The autoclave inside was substituted by hydrogen gas, and hydrogen gas was supplied to keep the pressure of the autoclave inside at 4.5 MPa, and hydrogenation reaction was carried out at 160 °C for six hours. Subsequently, by use of a pressurization filter where radiolite # 800 was used as filter aid, pressurized filtration was carried out at pressure 0.25 MPa to obtain a colorless transparent solution from which the catalyst was removed. This hydrogenation reaction solution was stirred and poured into a mixed solvent of 250 parts of acetone and 250 parts of isopropanol to deposite the hydrogenated product, and the product was selected by filtration and collected. The collected hydrogenated product was further washed with 200 parts of acetone and subsequently dried by a vacuum drying machine at 100 °C that was decompressed 1 mmHg or less for 24 hours. The yield of the hydrogenated product was 99%. The hydrogenated product (hereinafter referred to as HPSt) had weight average molecular weight (Mw) of 91,000, molecular weight distribution (Mw/Mn) of 1.27, and Tg of 125 °C.

[Production Example 4]

Into a nitrogen substituted glass autoclave having a capacity of 500 ml, 235 ml of cyclohexane was charged, and the fluid phase and the gas phase was saturated with ethylene with the feed rate of 50 liters/hr. Thereafter, to the autoclave, 2 ml of tetracyclo[4.4.0.$1^{2,5}$.$1^{7,10}$]dodeca-3-en (hereinafter referred to as "TCD"), 1.25 mmol in aluminum atom conversion of methyl aluminoxane (MAO), and the 0.001 mmol of dialkoxy dichloro titanium catalyst of the structure shown in the formula (4) were added sequentially to initiate polymerization reaction. The reaction was carried out under ethylene gas atmosphere at 25 °C under ordinary pressure for 10 minutes, and adding a small amount of isobutyl alcohol allowed stopping the polymerization reaction. After completion of polymerization, the reactant was charged into a mixed solvent of acetone / methanol (each 500 ml) with addition of 5 ml of concentrated hydrochloric acid to separate out all the polymer, and stirred and filtered by a glass filter. The polymer was dried under reduced pressure at 130 °C for ten hours to obtain ethylene / TCD copolymer. When weight average molecular weight (Mw) and molecular weight distribution (Mw/Mn) of the ethylene / TCD copolymer (hereinafter referred to as APO) were measured, they showed Mw = 65,000, Mw/Mn=2.15. In addition, the glass transition temperature was 132 °C.

[Chemical Formula 7]

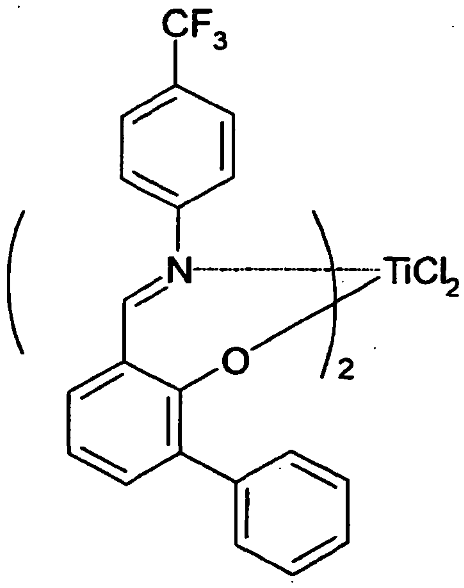

... Formula(4)

[Production Example 5]

Into a reaction vessel equipped with a thermometer, a stirrer and a phosgene blow pipe, 840.0 parts of ion-exchanged water and 58.8 parts of potassium hydroxide were charged, and into this, 48.4 parts of 4,4'-(p-phenylene diisopropiriden)diphenole, 23.9 parts of 2,2-bis(3-methyl-4-hydroxyphenyl) propane, and 0.15 part of hydrosulfite were dissolved, and further 555.0 parts of methylene chloride was added, and finally, 30.0 parts of phosgene were blown in at 18 to 21 °C for about 35 minutes.
Subsequently, 1.75 parts of p-tert-butylphenol was added, and furthermore, 0.08 part of triethylamine was added and emulsified, and stirred at 26 to 33 °C for one hour to carry out the reaction. The reaction product was diluted with methylene chloride and washed with water, and made hydrochloric acid acidity and washed with water, and when the conductivity of the water phase became roughly same as that of the ion-exchanged water, the organic phase was separated, methylene chloride was evaporated while the polymer was crushed to obtain 77.7 parts of polymers (yield 97%) in the form of powder. Tg of the polymer (hereinafter referred to as PC) was 139 °C.

[Production Example 6]

Into a separable flask equipped with a stirrer, 1,500 parts of pure water was charged, and 15 parts of polyvinyl alcohol as a dispersant was added and dissolved. On the side, into 1,000 parts of methyl methacrylate, 1.5 parts of n-octylmercaptan and 1.0 part of azobisisobutyronitrile were added and dissolved to obtain a mixture. The mixture was charged into the above separable flask, and substituted by nitrogen and stirred at 400 rpm for 15 minutes. Subsequently, it was heated up to 75 °C to initiate polymerization, and the polymerization was continued at 95 °C for 30 minutes after the peak time. the obtained beads-shaped polymer (hereinafter referred to as PMMA) was separated by filtration, and washed with water, and dried at 75 °C for 24 hours.

Example 1

100 parts of the HROP1 obtained in the production example 1 and 0.1 part of N,N'-bis(2,2,6,6-tetramethyl- 4-piperidyl)- N,N'-diformyl hexamethylenediamine (stabilizer A) were mixed in a biaxial kneading machine and extruded to obtain a pelletized resin composition.

(Light Transmittance)

The pellets were heated at 80 °C for four hours to be dried, and subsequently by use of an injection molding device, a molded body of 65 mm × 65 mm × 3 mm was obtained. The light transmittance of the molded product at wavelength 400 nm, in light path length 3 mm was measured by use of a spectrophotometer ("V-570" produced by JASCO Corporation).

(Laser Resistance)

Subsequently, to the molded product, under environment at 60 °C, a laser of 405±10nm and 400mW/cm$^2$ was irradiated for 240 hours. The light transmittance of the molded product after the laser irradiation was measured by use of a spectrophotometer ("V-570" produced by JASCO Corporation) to obtain the decline quantity of the light transmittance of the 400nm as laser resistance.

(Saturated Water Absorption)

A measurement was carried out according to JIS K7209. The molded product was dried at 50 °C for 24 hours, and cooled down in a desiccators, subsequently dry mass (M1) of the molded product was measured. In a room at temperature of 23 °C and relative humidity of 50%, the molded product was dipped in water until there was no mass change, that is, until it was saturated, and subsequently the saturation water-absorbed mass (M2) of the molded product was measured. From these measurements, the saturated water absorption was obtained by the following formula.

$$\text{saturated water absorption (\%)} = [(M2 - M1) / M1] \times 100$$

The evaluation results are shown in Table 1.

Example 2

In the same manner as in the Example 1 except that the HROP2 obtained in the production example 2 was employed in the place of the HROP1, a resin composition was obtained.

Example 3

In the same manner as in the Example 1 except that the HPSt obtained in the production example 3 was employed in the place of the HROP1, a resin composition was obtained.

Example 4

In the same manner as in the Example 1 except that the APO obtained in the production example 4 was employed in the place of the HROP1, a resin composition was obtained.

Example 5

In the same manner as in the Example 1 except that the HPSt obtained in the production example 3 was employed in the place of the HROP1, and N,N'-bis(2,2,6,6- tetramethyl- 4-N-methylpiperidyl)-N,N'-diformyl-hexamethylenediamine (stabilizer B) was employed in the place of the stabilizer A, a resin composition was obtained.

Example 6

In the same manner as in the Example 1 except that the HPSt obtained in the production example 3 was employed in the place of the HROP1, and N,N'-bis(2,2,6,6-tetramethyl- 4-piperidyl)- N,N'-bishexamethylene stearic acid amide (stabilizer C) was employed in the place of the stabilizer A, a resin composition was obtained.

Comparative Example 1

In the same manner as in the Example 1 except that the HPSt obtained in the production example 3 was employed in the place of the HROP1, and 1-{2-[3-(3,5-di-t-butyl-4-hydroxyphenyl)propionyloxy]ethyl}-4-[3-(3,5-di-t-butyl-4-hydroxyphenyl)propionyloxy]-2,2,6,6-tetramethyl piperidine (stabilizer D) was employed in the place of the stabilizer A, a resin composition was obtained.

Comparative Example 2

In the same manner as in the Example 1 except that the HPSt obtained in the production example 3 was employed in the place of the HROP1, and a polycondensation product (stabilizer E) with dibutylamine, 1,3,5-triazine-N, N'-bis(2,2,6,6-tetramethyl-4-piperidyl)-1,6-hexamethylenediamine, and N-(2,2,6,6-tetramethyl-4-piperidyl)butylamine was employed in the place of the stabilizer A, a resin composition was obtained.

Comparative Example 3

In the same manner as in the Example 1 except that the HPSt obtained in the production example 3 was employed in the place of the HROP1, and bis(2,2,6,6- tetramethyl- 4-piperidine) sebacate (stabilizer F) was employed in the place of the stabilizer A, a resin composition was obtained.

Comparative Example 4

In the same manner as in the Example 1 except that the PC obtained in the production example 5 was employed in the place of the HROP1, a resin composition was obtained.

Comparative Example 5

In the same manner as in the Example 1 except that the PMMA obtained in the production example 6 was employed in the place of the HROP1, a resin composition was obtained.
[Table 1]

Table 1

| | Resin | light stabilizer | Light transmittance | Laser resistance | Water absorption |
|---|---|---|---|---|---|
| Ex.1 | HROP1 | stabilizer A | 90% | 0.80% | <0.01 |
| Ex.2 | HROP2 | stabilizer A | 90% | 0.80% | <0.01 |
| Ex.3 | HPSt | stabilizer A | 91% | 0.20% | <0.01 |
| Ex.4 | APO | stabilizer A | 85% | 0.50% | <0.01 |
| Ex.5 | HPSt | stabilizer B | 91% | 0.20% | <0.01 |
| Ex.6 | HPSt | stabilizer C | 91% | 0.20% | <0.01 |
| Comp.Ex.1 | HPSt | stabilizer D | 90% | 1.50% | <0.01 |
| Comp.Ex.2 | HPSt | stabilizer E | 88% | 1.00% | <0.01 |
| Comp.Ex.3 | HPSt | stabilizer F | 90% | 1.50% | <0.01 |
| Comp.Ex.4 | PC | stabilizer A | 88% | 0.50% | 0.2 |
| Comp.Ex.5 | PMMA | stabilizer A | 91% | 0.20% | 0.3 |

HROP1 : hydrogenated product of ring-opening polymer with monomer having norbornene structure obtained in the production example 1.
HROP2 : hydrogenated product of ring-opening polymer with monomer having norbornene structure obtained in the production example 2.
HPSt : aromatic ring-hydrogenated product of copolymer with styrene and isoprene obtained in the production example 3.
APO : additional copolymer with monomer having norbornene structure and ethylene obtained in the production example 4.
PC : polycarbonate resin obtained in the production example 5.
PMMA : polymethyl methacrylate resin obtained in the production example 6

Stabilizer A : N,N'- bis (2,2,6,6- tetramethyl- 4-piperidyl)-N,N'-diformyl-hexamethylenediamine.
Stabilizer B : N,N'-bis(2,2,6,6-tetramethyl-4-N-methylpiperidyl)-N,N'-diformyl-hexamethylenediamine.
Stabilizer C : N,N'- bis (2,2,6,6- tetramethyl- 4-piperidyl)-N,N'-bishexamethylene stearic acid amide.
Stabilizer D : 1-{2-[3-(3,5-di-t-butyl-4-hydroxyphenyl)propionyloxy]ethyl}-4-[3-(3,5-di-t-butyl-4-hydroxyphenyl) propionyloxy]- 2,2,6,6- tetramethyl piperidine.
Stabilizer E : polycondensation product with dibutylamine, 1,3,5-triazine - N,N'-bis(2,2,6,6-tetramethyl-4-piperidyl)-1,6-hexamethylenediamine, and N-(2,2,6,6-tetramethyl-4-piperidyl)butylamine.
Stabilizer F : bis(2,2,6,6-tetramethyl-4-piperidine)sebacate

As seen from the Examples and the Comparative examples, in the resin compositions according to the present invention that comprises an alicyclic structure-containing polymer and a piperidine derivative represented in the formula (1), the light transmittance scarcely declines even by the irradiation of the blue laser light for a long time. In contrast, it is understood that in the resin compositions containing other light stabilizers (see Comparative examples 1 to 3), the light transmittance falls by not less than 1% by the irradiation of the blue laser light. Moreover, it is understood that in other resins than the alicyclic structure-containing polymers such as polycarbonate and polymethyl methacrylate and the like, the water absorption is high even if the piperidine derivative represented in the formula (1) is contained therein.

## Claims

**1.** A resin composition comprising
an alicyclic structure-containing polymer and at least one of piperidine derivatives represented in Formula (1)

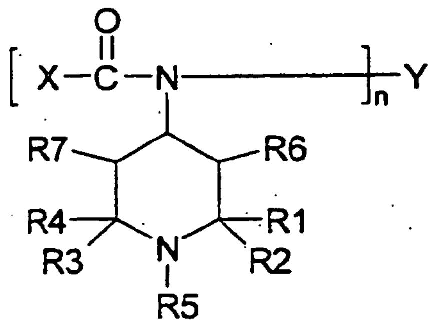

... Formula(1)

wherein, in the formula (1), n is an integer of 1 or 2,

R1, R2, R3 and R4 independently represent an alkyl group having 1 to 4 of carbon atoms, or
R1 and R2, or R3 and R4 conjoinedly represent tetramethylene group or pentamethylene group;
R6 and R7 independently represent
hydrogen atom; or
an alkyl group having 1 to 4 of carbon atoms;
R5 represents
hydrogen atom;
an alkyl group having 1 to 22 of carbon atoms;
an alkenyl group having 3 to 22 of carbon atoms;
a phenylalkyl group having 7 to 12 of carbon atoms which may be substituted by an alkyl group having 1 to 4 of carbon atoms, fluorine atom, chlorine atom, an alkoxyl group having 1 to 4 of carbon atoms, methylenedioxy group and / or a di-alkyl amino group in which the alkyl has 1 to 4 of carbon atoms ;
an alkanoyl group having 1 to 22 of carbon atoms ;
a cyano alkyl group having 2 to 3 of carbon atoms ;
a hydroxy alkyl group having 1 to 22 of carbon atoms ; or
an amino alkyl group having 2 to 22 of carbon atoms,
X represents
hydrogen atom ;
an alkyl group having 1 to 22 of carbon atoms ;
a cycloalkyl group having 3 ot 12 of carbon atoms ;
a bicycloalkyl group having 6 to 12 of carbon atoms, in which the alkyl group having 1 to 22 of carbon atoms, the cycloalkyl group having 3 to 12 of carbon atoms, and the bicycloalkyl group having 6 to 12 of carbon atoms may be substituted by cyano group, hydroxyl group or an alkoxycarbonyl group having 1 to 4 of carbon atoms, and, in addition, those whose number of carbon is 2 to 22 among the alkyl group having 1 to 22 of carbon atoms may have ether structure which has oxygen atom or sulfur atom in the alkyl chain thereof;
a phenyl alkyl group or a diphenyl alkyl group having 7 to 22 of carbon atoms which may be substituted by an alkyl group having 1 to 4 of carbon atoms, fluorine atom, chlorine atom, an alkoxyl group having 1 to 4 of carbon atoms, methylenedioxy group, ethylenedioxy group or a di-alkyl amino group in which the alkyl has 1 to 4 of carbon atoms;
a phenyl group which may be substituted by an alkyl group having 1 to 4 of carbon atoms or an alkoxycarbonyl group having 1 to 4 of carbon atoms ;
a group represented by the following formula(2) in which the symbols have the same meanings as the above ; or
an alkyl group having 1 to 22 of carbon atoms substituted by a heterocycle group ;

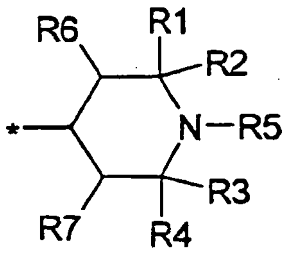

... Formula (2)

Y, when n is 1, represents,
hydrogen atom ;
an alkyl group having 1 to 22 of carbon atoms ;
a cycloalkyl group having 3 to 12 of carbon atoms ;
a bicycloalkyl group having 6 to 12 of carbon atoms,
in which, the alkyl group having 1 to 22 of carbon atoms, the cycloalkyl group having 3 to 12 of carbon atoms, and the bicycloalkyl group having 6 to 12 of carbon atoms may be substituted by cyano group, hydroxyl group or an alkoxycarbonyl group having 1 to 4 of carbon atoms, and, in addition, those whose number of carbon is 2 to 22 among the alkyl group having 1 to 22 of carbon atoms may have ether structure having oxygen atom or sulfur atom in the alkyl chain thereof;
a phenyl alkyl group or a diphenyl alkyl group having 7 to 22 of carbon atoms which may be substituted by an alkyl group having 1 to 4 of carbon atoms, fluorine atom, chlorine atom, an alkoxyl group having 1 to 4 carbon atoms, methylenedioxy group, ethylenedioxy group or a di-alkyl amino group in which the alkyl has 1 to 4 of carbon atoms;
a phenyl group which may be substituted by an alkyl group having 1 to 4 of carbon atoms or an alkoxycarbonyl group having 1 to 4 of carbon atoms;
a group represented by the following formula (3) in which the symbols have the same meanings as the above; or
an alkyl group having 1 to 22 of carbon atoms substituted by a heterocycle group ;

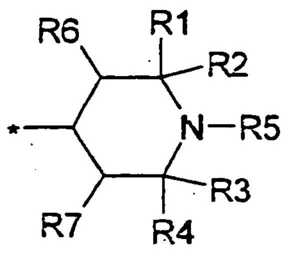

... Formula(3)

Y, when n is 2, represents
an alkylene group having 2 to 22 of carbon atoms ;
a cycloalkylene group having 5 to 22 of carbon atoms ;
a phenylalkylene group having 8 to 14 of carbon atoms ;
a phenylene group ; or
an alkylene group having 2 to 30 of carbon atoms in which oxygen atom, sulfur atom or five to six membered heterocycle group is inserted into the alkylene chain thereof.

2. The resin composition according to claim 1, wherein each of R1, R2, R3 and R4 in the formula (1) is methyl group, R5 is hydrogen atom or methyl group, and R6 and R7 are hydrogen atom.

3. The resin composition according to claim 1 or 2, wherein X in the Formula (1) is hydrogen atom.

4. The resin composition according to claim 2, wherein n is 2, X is hydrogen atom, and Y is hexamethylene group in the Formula (1).

5. The resin composition according to any one of claims 1 to 4, wherein the piperidine derivatives represented in the

Formula (1) is N,N'- bis(2,2,6,6-tetramethyl- 4-piperidyl)- N,N'-diformyl-alkylenediamine, or N,N'- bis (2,2,6,6- tetramethyl- 4-piperidyl)- N,N'-bisalkylene fatty acid amide.

6. The resin composition according to any one of claims 1 to 5, wherein the piperidine derivatives represented in the Formula (1) is N,N'-bis(2,2,6,6-tetramethyl-4-piperidyl)-N,N'-diformyl-hexamethylenediamine, N,N'- bis (2,2,6,6- tetramethyl- 4-N-methylpiperidyl)-N,N'-diformyl-hexamethylenediamine or N,N'-bis(2,2,6,6-tetramethyl-4-piperidyl)-N,N'-bishexamethylene stearic acid amide.

7. The resin composition according to any one of claims 1 to 6, wherein the alicyclic structure-containing polymer is norbornene polymer, monocyclic olefin polymer, cyclic conjugated diene polymer, vinyl alicyclic hydrocarbon polymer or hydrogenated products of these.

8. The resin composition according to any one of claims 1 to 6, wherein the alicyclic structure-containing polymer is norbornene polymer, or vinyl alicyclic hydrocarbon polymer or hydrogenated products thereof.

9. The resin composition according to any one of claims 1 to 6, wherein the alicyclic structure-containing polymer is ring-opening polymer with norbornene monomer and hydrogenated product thereof; additional polymer with norbornene monomer and hydrogenated product thereof; additional copolymer with norbornene monomer and vinyl compound, and hydrogenated product thereof; or aromatic ring-hydrogenated product of polymer with vinyl aromatic monomer.

10. The resin composition according to any one of claims 1 to 9, wherein the amount of the piperidine derivatives represented in the Formula (1) is 0.001 to 5 parts by weight to 100 parts by weight of the alicyclic structure-containing polymer.

11. The resin composition according to any one of claims 1 to 10, which is for optics.

**Patentansprüche**

1. Harzzusammensetzung, umfassend
ein Polymer, enthaltend eine alicyclische Struktur und mindestens eines der Piperidinderivate der Formel (1)

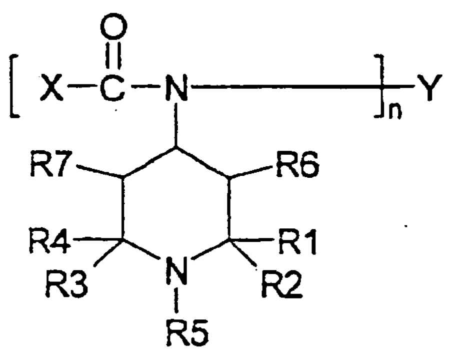

... Formel (1)

wobei in Formel (1) n eine ganze Zahl von 1 oder 2 ist,
R1, R2, R3 und R4 unabhängig voneinander einen Alkylrest mit 1 bis 4 Kohlenstoffatomen darstellen oder
R1 und R2 oder R3 und R4 miteinander verbunden eine Tetramethylengruppe oder Pentamethylengruppe darstellen,
R6 und R7 unabhängig voneinander ein Wasserstoffatom oder einen Alkylrest mit 1 bis 4 Kohlenstoffatomen darstellen;
R5 ein Wasserstoffatom;
einen Alkylrest mit 1 bis 22 Kohlenstoffatomen;
einen Alkenylrest mit 3 bis 22 Kohlenstoffatomen;
einen Phenylalkylrest mit 7 bis 12 Kohlenstoffatomen, welcher mit einem Alkylrest mit 1 bis 4 Kohlenstoffatomen, einem Fluoratom, einem Chloratom, einem Alkoxylrest mit 1 bis 4 Kohlenstoffatomen, einer Methylendioxygruppe

und/oder einem Dialkylaminorest, in welchem der Alkylrest 1 bis 4 Kohlenstoffatome aufweist, substituiert sein kann;
einen Alkanoylrest mit 1 bis 22 Kohlenstoffatomen;
einen Cyanoalkylrest mit 2 bis 3 Kohlenstoffatomen;
einen Hydroxyalkylrest mit 1 bis 22 Kohlenstoffatomen; oder
einen Aminoalkylrest mit 2 bis 22 Kohlenstoffatomen darstellt;
X ein Wasserstoffatom;
einen Alkylrest mit 1 bis 22 Kohlenstoffatomen;
einen Cycloalkylrest mit 3 bis 12 Kohlenstoffatomen;
einen Bicycloalkylrest mit 6 bis 12 Kohlenstoffatomen, in welchem der Alkylrest mit 1 bis 22 Kohlenstoffatomen, der Cycloalkylrest mit 3 bis 12 Kohlenstoffatomen und der Bicycloalkylrest mit 6 bis 12 Kohlenstoffatomen mit einer Cyanogruppe, einer Hydroxylgruppe oder einem Alkoxycarbonylrest mit 1 bis 4 Kohlenstoffatomen substituiert sein kann und zusätzlich die Reste, deren Anzahl an Kohlenstoffatomen 2 bis 22 beträgt unter dem Alkylrest mit 1 bis 22 Kohlenstoffatomen eine Etherstruktur aufweisen können, die ein Sauerstoffatom oder ein Schwefelatom in der Alkylkette davon aufweisen;
einen Phenylalkylrest oder einen Diphenylalkylrest mit 7 bis 22 Kohlenstoffatomen, welcher mit einem Alkylrest mit 1 bis 4 Kohlenstoffatomen, einem Fluoratom, einem Chloratom, einem Alkoxyrest mit 1 bis 4 Kohlenstoffatomen, einer Methylendioxygruppe, einer Ethylendioxygruppe oder einem Dialkylaminorest, in welchem der Alkylrest 1 bis 4 Kohlenstoffatome aufweist, substituiert sein kann;
eine Phenylgruppe, welche mit einem Alkylrest mit 1 bis 4 Kohlenstoffatomen oder einem Alkoxycarbonylrest mit 1 bis 4 Kohlenstoffatomen substituiert sein kann;
einen Rest dargestellt durch die folgende Formel (2), in welcher die Symbole die gleiche Bedeutung wie oben stehend haben; oder
einen Alkylrest mit 1 bis 22 Kohlenstoffatomen, welcher mit einem heterocyclischen Rest substituiert ist

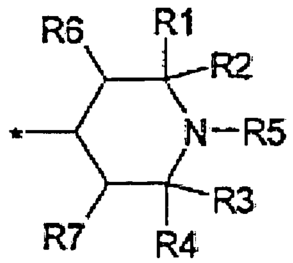

... Formel (2)

darstellt;
Y, wenn n gleich 1 ist,
ein Wasserstoffatom;
einen Alkylrest mit 1 bis 22 Kohlenstoffatomen;
einen Cycloalkylrest mit 3 bis 12 Kohlenstoffatomen;
einen Bicycloalkylrest mit 6 bis 12 Kohlenstoffatomen, in welchem der Alkylrest mit 1 bis 22 Kohlenstoffatomen, der Cycloalkylrest mit 3 bis 12 Kohlenstoffatomen und der Bicycloalkylrest mit 6 bis 12 Kohlenstoffatomen mit einer Cyanogruppe, einer Hydroxylgruppe oder einem Alkoxycarbonylrest mit 1 bis 4 Kohlenstoffatomen substituiert sein kann und zusätzlich die Reste, deren Anzahl an Kohlenstoffatomen 2 bis 22 beträgt unter dem Alkylrest mit 1 bis 22 Kohlenstoffatomen eine Etherstruktur aufweisen können, die ein Sauerstoffatom oder ein Schwefelatom in der Alkylkette davon aufweisen;
einen Phenylalkylrest oder einen Diphenylalkylrest mit 7 bis 22 Kohlenstoffatomen, welcher mit einem Alkylrest mit 1 bis 4 Kohlenstoffatomen, einem Fluoratom, einem Chloratom, einem Alkoxyrest mit 1 bis 4 Kohlenstoffatomen, einer Methylendioxygruppe, einer Ethylendioxygruppe oder einem Dialkylaminorest, in welchem der Alkylrest 1 bis 4 Kohlenstoffatome aufweist, substituiert sein kann;
eine Phenylgruppe, welche mit einem Alkylrest mit 1 bis 4 Kohlenstoffatomen oder einem Alkoxycarbonylrest mit 1 bis 4 Kohlenstoffatomen substituiert sein kann;
einen Rest, dargestellt durch die folgende Formel (3), in welcher die Symbole die gleiche Bedeutung wie oben stehend haben; oder
einen Alkylrest mit 1 bis 22 Kohlenstoffatomen, welcher mit einem heterocyclischen Rest substituiert ist

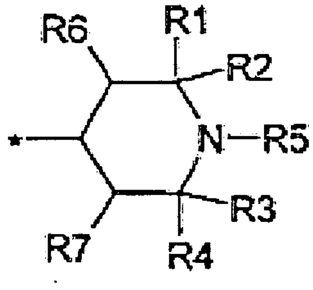

... Formel (3)

darstellt;
Y, wenn n gleich 2 ist,
einen Alkylenrest mit 2 bis 22 Kohlenstoffatomen;
einen Cycloalkylenrest mit 5 bis 22 Kohlenstoffatomen;
einen Phenylalkylenrest mit 8 bis 14 Kohlenstoffatomen;
eine Phenylengruppe; oder
einen Alkylenrest mit 2 bis 30 Kohlenstoffatomen, in welchem ein Sauerstoffatom, ein Schwefelatom oder ein fünf- bis sechs-gliedriger heterocyclischer Rest in die Alkylenkette davon eingefügt wird, darstellt.

**2.** Harzzusammensetzung gemäß Anspruch 1, wobei jeder der Reste R1, R2, R3 und R4 in der Formel (1) eine Methylgruppe darstellt, R5 ein Wasserstoffatom oder eine Methylgruppe darstellt und R6 und R7 ein Wasserstoffatom darstellen.

**3.** Harzzusammensetzung gemäß Anspruch 1 oder 2, wobei X in der Formel (1) ein Wasserstoffatom darstellt.

**4.** Harzzusammensetzung gemäß Anspruch 2, wobei n gleich 2 ist, X ein Wasserstoffatom darstellt und Y eine Hexamethylengruppe in der Formel (1) darstellt.

**5.** Harzzusammensetzung gemäß einem der Ansprüche 1 bis 4, wobei die in Formel (1) dargestellten Piperidinderivate für N,N'-Bis(2,2,6,6-tetramethyl-4-piperidyl)-N,N'-diformylalkylendiamin oder N,N'-Bis(2,2,6,6-tetramethyl-4-piperidyl)-N,N'-bisalkylen-Fettsäureamid stehen.

**6.** Harzzusammensetzung gemäß einem der Ansprüche 1 bis 5, wobei die in Formel (1) dargestellten Piperidinderivate für N,N'-Bis(2,2,6,6-tetramethyl-4-piperidyl)-N,N'-diformylhexamethylendiamin, N,N'-Bis(2,2,6,6-tetramethyl-4-N-methylpiperidyl)-N,N'-diformylhexamethylendiamin oder N,N'-Bis(2,2,6,6,-tetramethyl-4-piperidyl)-N,N'-bishexamethylen-Stearinsäureamid stehen.

**7.** Harzzusammensetzung gemäß einem der Ansprüche 1 bis 6, wobei das die alicyclische Struktur enthaltende Polymer ein Norbomenpolymer, monocyclisches Olefinpolymer, cyclisches konjugiertes Dienpolymer, Vinyl-alicyclisches Kohlenwasserstoffpolymer oder hydrierte Produkte davon darstellt.

**8.** Harzzusammensetzung gemäß einem der Ansprüche 1 bis 6, wobei das die alicyclische Struktur enthaltende Polymer ein Norbornenpolymer oder ein Vinyl-alicyclisches Kohlenwasserstoffpolymer oder hydrierte Produkte davon darstellt.

**9.** Harzzusammensetzung gemäß einem der Ansprüche 1 bis 6, wobei das die alicyclische Struktur enthaltende Polymer ein ringöffnendes Polymer mit Norbornenmonomer und hydriertes Produkt davon; ein zusätzliches Polymer mit Norbornenmonomer und hydriertes Produkt davon; ein zusätzliches Copolymer mit Norbornenmonomer und Vinylverbindung und hydriertes Produkt davon; oder ein aromatisches ringhydriertes Produkt eines Polymers mit einem Vinyl-aromatischen Monomer darstellt.

**10.** Harzzusammensetzung gemäß einem der Ansprüche 1 bis 9, wobei die Menge der durch die Formel (1) dargestellten Piperidinderivate 0,001 bis 5 Gewichtsteile bis 100 Gewichtsteile des die alicyclische Struktur enthaltenden Polymers beträgt.

**11.** Harzzusammensetzung gemäß einem der Ansprüche 1 bis 10 in der Optik.

**Revendications**

**1.** Composition de résine, qui comprend un polymère comportant une structure alicyclique et au moins l'un des dérivés de pipéridine représentés par la formule (1) :

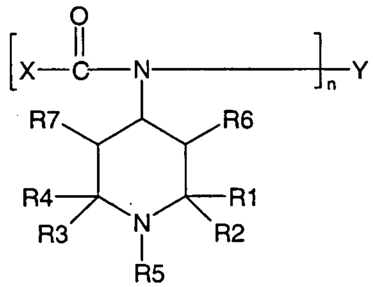

Formule (1)

dans laquelle formule (1) :

l'indice n est un nombre entier qui vaut 1 ou 2 ;
les symboles R1, R2, R3 et R4 représentent chacun, indépendamment,

- un groupe alkyle comportant 1 à 4 atomes de carbone,
- ou bien R1 et R2, ou R3 et R4, représentent conjointement un groupe tétraméthylène ou pentaméthylène ;

les symboles R6 et R7 représentent chacun, indépendamment,

- un atome d'hyd-rogène,
- ou un groupe alkyle comportant 1 à 4 atomes de carbone ; R5 représente
- un atome d'hydrogène,
- un groupe alkyle comportant 1 à 22 atomes de carbone,
- un groupe alcényle comportant 3 à 22 atomes de carbone,
- un groupe phényl-alkyle comportant 7 à 12 atomes de carbone, qui peut porter en tant que substituant (s) un groupe alkyle comportant 1 à 4 atomes de carbone, un atome de fluor, un atome de chlore, un groupe alcoxy comportant 1 à 4 atomes de carbone, un groupe méthylène-dioxy et/ou un groupe dialkyl-amino dont les groupes alkyle comportent 1 à 4 atomes de carbone,
- un groupe alcanoyle comportant 1 à 22 atomes de carbone,
- un groupe cyano-alkyle comportant 2 à 3 atomes de carbone,
- un groupe hydroxy-alkyle comportant 1 à 22 atomes de carbone,
- ou un groupe amino-alkyle comportant 2 à 22 atomes de carbone ;

X représente

- un atome d'hydrogène,
- un groupe alkyle comportant 1 à 22 atomes de carbone,
- un groupe cycloalkyle comportant 3 à 12 atomes de carbone,
- un groupe bicycloalkyle comportant 6 à 12 atomes de carbone, lesquels groupes alkyle comportant 1 à 22 atomes de carbone, cycloalkyle comportant 3 à 12 atomes de carbone et bicycloalkyle comportant 6 à 12 atomes de carbone peuvent porter en tant que substituant(s) un groupe cyano, un groupe hydroxyle ou un groupe alcoxycarbonyle comportant 1 à 4 atomes de carbone, étant en outre entendu que ceux des groupes alkyle comportant 1 à 22 atomes de carbone qui comportent 2 à 22 atomes de carbone peuvent comporter un chaînon de type éther, c'est-à-dire un atome d'oxygène ou de soufre inséré dans la chaîne du groupe alkyle,
- un groupe phényl-alkyle ou diphényl-alkyle comportant 7 à 22 atomes de carbone, qui peut porter en tant que substituant(s) un groupe alkyle comportant 1 à 4 atomes de carbone, un atome de fluor, un atome de chlore, un groupe alcoxy comportant 1 à 4 atomes de carbone, un groupe méthylène-dioxy, un groupe

éthylène-dioxy, ou un groupe dialkyl-amino dont les groupes alkyle comportent 1 à 4 atomes de carbone,
- un groupe phényle, qui peut porter en tant que substituant(s) un groupe alkyle comportant 1 à 4 atomes de carbone ou un groupe alcoxy-carbonyle comportant 1 à 4 atomes de carbone,
- un groupe représenté par la formule (2) donnée ci-dessous, dans laquelle les divers symboles ont les significations indiquées plus haut,
- ou un groupe alkyle comportant 1 à 22 atomes de carbone et portant un groupe hétérocyclique en tant que substituant ;

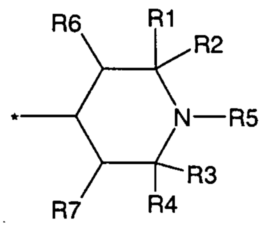

formule (2)

et Y, si l'indice n vaut 1, représente

- un atome d'hydrogène,
- un groupe alkyle comportant 1 à 22 atomes de carbone,
- un groupe cycloalkyle comportant 3 à 12 atomes de carbone,
- un groupe bicycloalkyle comportant 6 à 12 atomes de carbone, lesquels groupes alkyle comportant 1 à 22 atomes de carbone, cycloalkyle comportant 3 à 12 atomes de carbone et bicycloalkyle comportant 6 à 12 atomes de carbone peuvent porter en tant que substituant(s) un groupe cyano, un groupe hydroxyle ou un groupe alcoxycarbonyle comportant 1 à 4 atomes de carbone, étant en outre entendu que ceux des groupes alkyle comportant 1 à 22 atomes de carbone qui comportent 2 à 22 atomes de carbone peuvent comporter un chaînon de type éther, c'est-à-dire un atome d'oxygène ou de soufre inséré dans la chaîne du groupe alkyle,
- un groupe phényl-alkyle ou diphényl-alkyle comportant 7 à 22 atomes de carbone, qui peut porter en tant que substituant(s) un groupe alkyle comportant 1 à 4 atomes de carbone, un atome de fluor, un atome de chlore, un groupe alcoxy comportant 1 à 4 atomes de carbone, un groupe méthylène-dioxy, un groupe éthylène-dioxy, ou un groupe dialkyl-amino dont les groupes alkyle comportent 1 à 4 atomes de carbone,
- un groupe phényle, qui peut porter en tant que substituant(s) un groupe alkyle comportant 1 à 4 atomes de carbone ou un groupe alcoxy-carbonyle comportant 1 à 4 atomes de carbone,
- un groupe représenté par la formule (3) donnée ci-dessous, dans laquelle les divers symboles ont les significations indiquées plus haut,
- ou un groupe alkyle comportant 1 à 22 atomes de carbone et portant un groupe hétérocyclique en tant que substituant ;

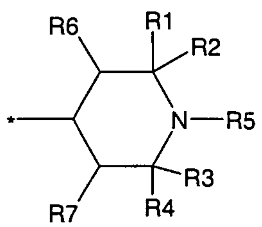

formule (3)

ou Y, si l'indice n vaut 2, représente

- un groupe alcanediyle comportant 2 à 22 atomes de carbone,
- un groupe cycloalcanediyle comportant 5 à 22 atomes de carbone,
- un groupe phényl-alcanediyle comportant 8 à 14 atomes de carbone,
- un groupe phénylène,
- ou un groupe alcanediyle comportant 2 à 30 atomes de carbone, dans la chaîne duquel groupe alcanediyle

est inséré un atome d'oxygène, un atome de soufre ou un groupe hétérocyclique comportant cinq ou six chaînons.

2. Composition de résine conforme à la revendication 1, dans laquelle, dans la formule (1), chacun des symboles R1, R2, R3 et R4 représente un groupe méthyle, R5 représente un atome d'hydrogène ou un groupe méthyle, et R6 et R7 représentent chacun un atome d'hydrogène.

3. Composition de résine conforme à la revendication 1 ou 2, dans laquelle, dans la formule (1), X représente un atome d'hydrogène.

4. Composition de résine conforme à la revendication 2, dans laquelle, dans la formule (1), l'indice n vaut 2, X représente un atome d'hydrogène et Y représente un groupe hexaméthylène.

5. Composition de résine conforme à l'une des revendications 1 à 4, dans laquelle les dérivés de pipéridine représenté par la formule (1) est une N,N'-bis(2,2,6,6-tétraméthyl-pipéridin-4-yl)-N,N'-diformyl-alcanediyldiamine ou un N,N'-bis(2,2,6,6-tétraméthyl-pipéridin-4-yl)-N,N'-bis-alcane-diyl(amide d'acide gras).

6. Composition de résine conforme à l'une des revendications 1 à 5, dans laquelle les dérivés de pipéridine représenté par la formule (1) sont de la N,N'-bis(2,2,6,6-tétraméthyl-pipéridin-4-yl)-N,N'-diformylhexamé-thylène-diamine, de la N,N'-bis(2,2,6,6-tétraméthyl-4-N-méthylpipéridin-yl)-N,N'-diformyl-hexaméthylène-diamine, ou du N,N'-bis (2,2,6,6-tétra-méthyl-pipéridin-4-yl)-N,N'-bis-hexaméthylène(stéaramide).

7. Composition de résine conforme à l'une des revendications 1 à 6, dans laquelle le polymère comportant une structure alicyclique est un polymère de norbornène, un polymère d'oléfine monocyclique, un polymère de diène conjugué cyclique, un polymère d'hydrocarbure vinyl-alicyclique, ou des produits d'hydrogénation d'un tel polymère.

8. Composition de résine conforme à l'une des revendications 1 à 6, dans laquelle le polymère comportant des structures alicycliques est un polymère de norbornène ou un polymère d'hydrocarbure vinyl-alicyclique, ou des produits d'hydrogénation d'un tel polymère.

9. Composition de résine conforme à l'une des revendications 1 à 6, dans laquelle le polymère comportant une structure alicyclique est un polymère d'ouverture de cycle d'un monomère de type norbornène ou un produit d'hydrogénation d'un tel polymère, un polymère d'addition d'un monomère de type norbornène ou un produit d'hydrogénation d'un tel polymère, un copolymère d'addition d'un monomère de type norbornène et d'un composé vinylique ou un produit d'hydrogénation d'un tel polymère, ou un produit d'hydrogénation de cycles aromatiques d'un polymère de monomère vinyl-aromatique.

10. Composition de résine conforme à l'une des revendications 1 à 9, dans laquelle la proportion des dérivés de pipéridine représentés par la formule (1) vaut de 0,001 à 5 parties en poids pour 100 parties en poids de polymère comportant une structure alicyclique.

11. Composition de résine conforme à l'une des revendications 1 à 10, destinée à des éléments d'optique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 04085538 A
- JP 2003276047 A
- JP H07216152 B
- WO 0192412 A
- JP H09268250 B
- JP H01160959 B
- JP 2003529588 A
- JP H0314882 B
- JP H03122137 B
- JP 6466216 B
- JP H06136057 B
- JP H07258318 B
- JP 51059989 A
- JP 63043910 A
- JP 64001706 A